# EUROPÄISCHE PATENTANMELDUNG

(11) **EP 1 191 745 A1**
(43) Veröffentlichungstag der Anmeldung: **27.03.2002**
(21) Anmeldenummer: 00120782.8
(22) Anmeldetag: 22.09.2000
(51) Int. Cl.: H04L 12/28, H04L 29/06

(54) **Verfahren zur Nachrichtenübertragung mithilfe von Mehrwegen**

(71) Anmelder: SIEMENS AKTIENGESELLSCHAFT, 80333 München (DE)
(72) Erfinder: Gradischnig, Klaus David, 82131 Gauting (DE); Tuexen, Michael, Dr., 81479 München (DE)

(57) **Zusammenfassung**

Gemäß der Erfindung wird eine Verbindung zum einen über einen langsamen, aber breitbandigen Weg, und zum anderen über einen schnellen, aber schmalbandigen Weg geführt. Dabei wird der langsame Weg für den primären Nachrichtentransport genutzt. Der zweite Weg wird für die Wiederholungsanforderungen und/oder die Wiederholungen genutzt. Damit hat man nur wenig Verkehr auf diesem Weg. Die gesamte Verbindung hat aber die Verzögerungseigenschaften des langsamen Weges im fehlerfreien Fall.

## Beschreibung

1. Welches technische Problem soll durch Ihre Erfindung gelöst werden?
2. Wie wurde dieses Problem bisher gelöst?
3. In welcher Weise löst Ihre Erfindung das angegebene technische Problem (geben Sie Vorteile an)?
4. Ausführungsbeispiel[e] der Erfindung.

### Zu 1.:

Man benutzt zur Nachrichtenübertragung auch Verbindungen mit großen Verzögerungen. Kommt es zu Übertragungsfehlern, so muß durch ein geeignetes Transportprotokol dafür gesorgt werden, daß die fehlerhaft übertragende Nachricht nochmals übertragen wird. Dadurch vergrößert sich sich die Übertragungsdauer wesentlich oder man kann nur einen Teil der zur Verfügung stehenden Bandbreite nutzen, um Daten zu übertragen und den Rest dazu verwenden, um Auswirkungen von Übertragungsfehlern vorzubeugen.

### Zu 2:

Benutzt man eine Verbindung mit einem Kommunikationsweg, so gibt es zwei Klassen von Verfahren:
Wird dazu eine Wiederholungsanforderung vom Empfänger benötigt, so dauert die Übertragung einer solchen Nachricht ungefähr drei Ende-zu-Ende Verzögerungen. Damit steigt die mittlere Übertragungsdauer mit der Fehlerrate. Beispiele solcher Verfahren sind Go-Back-N oder Multiple Selective Retransmission.
Wartet der Sender nicht auf eine solche Wiederholungsanforderung sondern überträgt einfach alle Nachrichten mehrfach, so bleibt die Übertragungsdauer fehlerhafter Meldungen in der Größe der Ende-zu-Ende Verzögerung. Hierbei kann allerdings die Verbindungskapazität höchstens bis zur Hälfte ausgenutzt werden. Beispielsweise wird diese Methode bei der Preventive Cyclic Retransmission Methode eingesetzt.
In letzter Zeit sind auch Transportprotokolle entwickelt worden (z.B. SCTP, Q.2111-SSCOP-MCE) die mehrere Kommunikationswege für eine Verbindung nutzen. Dabei werden aber z.B. bei SCTP die Daten, wenn möglich, auf einem anderen, als dem ersten Weg, wiederholt. Allerdings wird z. B. bei SCTP die Wiederholungsanforderung normalerweise über den Weg zurücktransportiert, über den die Nachricht hätte transportiert werden können.
SSCOPMCE hingegen legt im Standard keine Wegeauswahl fest.

### Zu 3.:

Gemäß der Erfindung wird eine Verbindung über einen langsamen (d.h. mit größerer Verzögerung) aber breitbandigen und einen schnellen, aber schmalbandigen Weg geführt. Dabei wird der langsame Weg für den primären Datentransport genutzt. Damit kann man z. B. den günstigen Preis der höheren Bandbreite eines solchen Weges nutzen. Der zweite Weg ist schnell und eventuell auch zuverlässiger, dafür hat er aber z.B. weniger Bandbreite. Dieser Weg wird für die Wiederholungsanforderungen und die Wiederholungen genutzt. Damit hat man nur wenig Verkehr auf diesem Weg. Die gesamte Verbindung hat aber die Verzögerungseigenschaften des langsamen Weges im fehlerfreien Fall. Man kann so eine Verbindung nutzen für Daten, die mit der Ende-zu-Ende Verzögerung des langsamen Weges fertig werden aber nicht mit einer grösseren oder dem Jitter, der durch Wiederholungen verursacht wird.

Der Erfindung liegt also die Erkenntnis zugrunde, daß man Multilink Protokolle derart modifizieren kann, daß man mit ihrer Hilfe die Übertragungseigenschaften einer Verbindung transparent wesentlich verbessern kann, indem man einen zweiten besseren Weg hinzunimmt. Dabei wird dieser aber nur so wenig wie möglich ausgelastet und kommt daher mit wenig Bandbreite aus.

### Zu 4.:

Als Ausführungsbeispiel wird das Stream Control Tranmission Protocol (SCTP) betrachtet. Dabei werden zwei Modifikationen vorgeschlagen:
1. Man sendet alle SCTP-Datagramme mit SACK-Chunks über den schnelleren Link. Hiemit hat man schon alle gewünschten Eingenschaften erfüllt. Allerdings sendet man mehr als nötig über den schnellen Weg. Aus Kostengründen möchte man dieses Vielleicht vermeiden.
2. Man sendet alle SCTP-Datagramme mit SACK-Chunks, die Gap Reports erhalten, über den schnellen Link. Damit hat man die ausgenutzte Bandbreite des schnellen Weges minimiert. Dafür braucht man aber ein bischen mehr funktionalität in den Endknoten.
Wird diese Methode nur von einer Seite implementiert, so ergibt sich dadurch die hier beschriebene Verbesserung in einer Richtung. Damit ist es nicht zwingend erforderlich, daß beide Seiten dieses Verfahren Implmentieren.

## Patentansprüche

1. Verfahren zur Nachrichtenübertragung mithilfe von Verbindungen, demgemäß
eine Verbindung zum einen über einen langsamen, aber breitbandigen Weg, und zum anderen über einen schnellen, aber schmalbandigen Weg geführt wird, wobei
der genannte langsame Weg für den primären Nachrichtentransport genutzt wird und der genannte schnelle Weg für Wiederholungsanforderungen und/oder Wiederholungen genutzt wird.

2. Verfahren nach Anspruch 1,
**dadurch gekennzeichnet, daß**
es in einem Multilink-Protokoll angewandt wird.
